# EUROPEAN PATENT APPLICATION

(11) **EP 0 898 275 A1**
(43) Date of publication of application: **24.02.1999**
(21) Application number: 98115629.2
(22) Date of filing: 19.08.1998
(51) Int. Cl.: G11B 19/12, G06F 3/06

(54) **Data storage apparatus**

(30) Priority: 20.08.1997 JP 224101/97; 14.11.1997 JP 314086/97
(71) Applicant: SONY CORPORATION, Tokyo (JP)
(72) Inventor: Kubota, Yoshiyasu, c/o Sony Corporation, Tokyo (JP)
(74) Representative: Melzer, Wolfgang, Dipl.-Ing.

(57) **Abstract**

A data storage apparatus (10) in which an interface (26) for a pre-existing floppy disc and another interface (36) for a large-capacity floppy disc compatible with the pre-existing floppy disc are provided and can be operated effectively independently of each other. A disc sort discriminating circuit (17) discriminates the type of the disc loaded on the apparatus to send the results of discrimination to a controller (15). The controller (15) is responsive to the results of discrimination to control a FDD interface (26) which is an interface for the pre-existing floppy disc and an IDE (36) interface which is an interface for the large-capacity floppy disc. The interface pertinent to the type of the loaded disc is controlled to perform a recording/reproducing operation corresponding to the accessing, while the interface pertinent to the type of the non-loaded disc is controlled to return a disc-absent response to a host computer (100).

## Description

### BACKGROUND OF THE INVENTION

### Field of the invention

This invention relates to a data storage apparatus and, more particularly, it relates to a data storage apparatus on which can be loaded or unloaded plural sorts of recording mediums.

### Description of Related Art

A data storage device used as a peripheral for a compute, such as a floppy disc drive device, usually has a sole interface with a host computer.

For example, a floppy disc drive device for driving a conventional 3.5-inch floppy disc having a recording capacity of 1 or 2 megabyte, has a so-called floppy disc drive (FDD) and has communication over this FDD interface with a host computer. Within the host computer is enclosed a floppy disc controller (FDC) for controlling the floppy disc drive device via FDD interface. This FDD interface lends itself to cost reduction in suppressing the data transfer speed and in limiting the control function. By storing a system file in a conventional 3.5-inch floppy disc and by loading the 3.5-inch floppy disc having the system file stored therein in advance at the time of starting of the host computer, the host computer can be started on the basis of the system file stored in the 3.5-inch floppy disc.

To the host computer is connected, besides the floppy disc drive device, a CD-ROM driving device, for example, via an interface other than and more intelligent than the FDD interface, such as IDE (intelligent drive electronics) interface. However, the host computer is configured not to be started by an equipment connected thereto by an interface other than the FDD interface.

Meanwhile, there is a demand for a large-capacity floppy disc drive device larger in recording capacity and higher in transfer rate than the conventional 3.5-inch floppy disc. Moreover, since the 3.5-inch floppy disc is used world-wide,
the driving device for the large-capacity floppy disc desirably can be used not only for a conventional large-capacity floppy disc but also for the 3.5-inch floppy disc. Moreover, the host computer desirably can be started on the basis of a system file having the conventional FDD interface and which is recorded on the conventional 3.5-inch floppy disc. For the large capacity floppy disc, an interface other than the FDD interface which is an intelligent high transfer rate FDD interface, is desirably employed.

### SUMMARY OF THE INVENTION

It is an object of the present invention to provide a data storage device capable of having communication with a host computer impeccably even if it has plural interfaces.

The present invention provides a data storage apparatus on which is detachably loaded one of plural types of the recording mediums, including a plurality of interfaces provided in association with different types of the recording mediums for connection to an external control device, means for discriminating the type of a loaded recording medium and control means which, when a command is supplied via one of the interfaces from the external control device, discriminates whether or not the interface coincides with the type of the loaded recording medium. The control means performs an operation corresponding to the command if the interface coincides with the type of the loaded recording medium. The control means sends the information specifying the absence of the loaded recording medium via the interface to the external control device.

FDD or IDE interface is among said plural interfaces.

According to the present invention, plural types of interfaces each associated with plural types of the recording mediums are provided and the type of the loaded recording medium is discriminated to control the operation of the associated interface to switch automatically the operation or response of the interfaces responsive to the loaded recording medium to permit appropriate processing responsive to the accessing from the host computer.

Also, if the interface associated with the loaded recording medium is allowed to perform the usual operation, while the interface not associated with the loaded recording medium is allowed to make a response which the interface makes in the absence of the recording medium, the host computer can perform the operation similar to that if the data storage apparatus is connected to the associated with the interface. In particular, if an accessing request is sent from the host computer to the recording medium of the type different from the type of the loaded recording medium, a response to the effect that there is no loaded recording medium is returned to the host computer, so that a sole data storage apparatus can be used as plural apparatus without imposing any large load on the user.

### BRIEF DESCRIPTION OF THE DRAWINGS

Fig.1 is a block diagram showing an example of a disc drive device embodying the present invention.
Fig.2 shows an example of a large-capacity floppy disc and a pre-existing floppy disc.
Fig.3 shows another example of a large-capacity floppy disc.
Fig.4 is a block diagram showing an example of a computer-side structure.
Fig.5 is a flowchart for illustrating the operation of confirming the possible presence of a disc and of discriminating the disc type.
Fig.6 is a flowchart for illustrating bootstrap processing at the time of system startup of the computer.
Fig.7 is a flowchart for illustrating the operation on accessing request to a large-capacity floppy disc.
Fig.8 is a flowchart for illustrating accessing request to a pr-existing floppy disc.

### DESCRIPTION OF THE PREFERRED EMBODIMENTS

Referring to the drawings, preferred embodiments of a data storage device according to the present invention will be explained in detail.

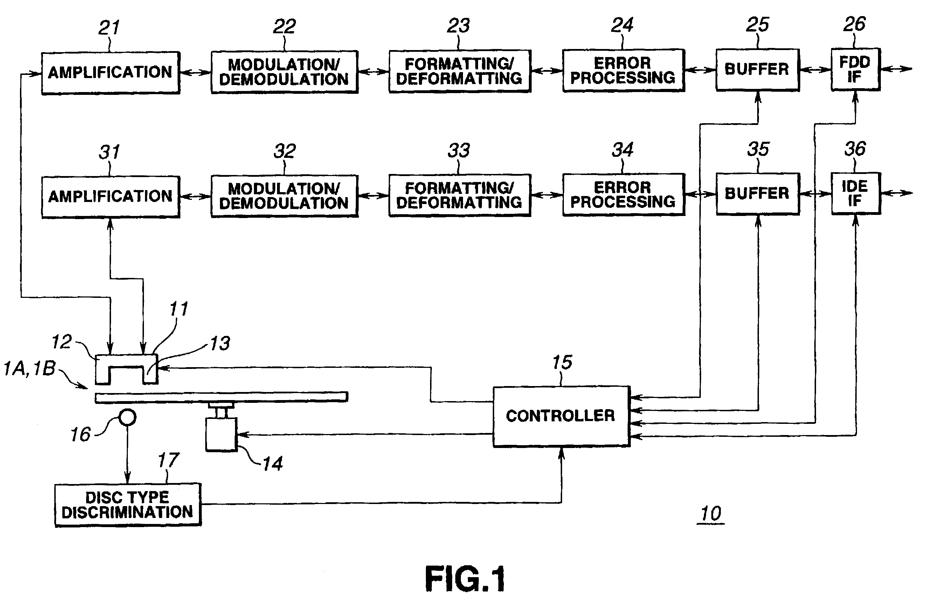

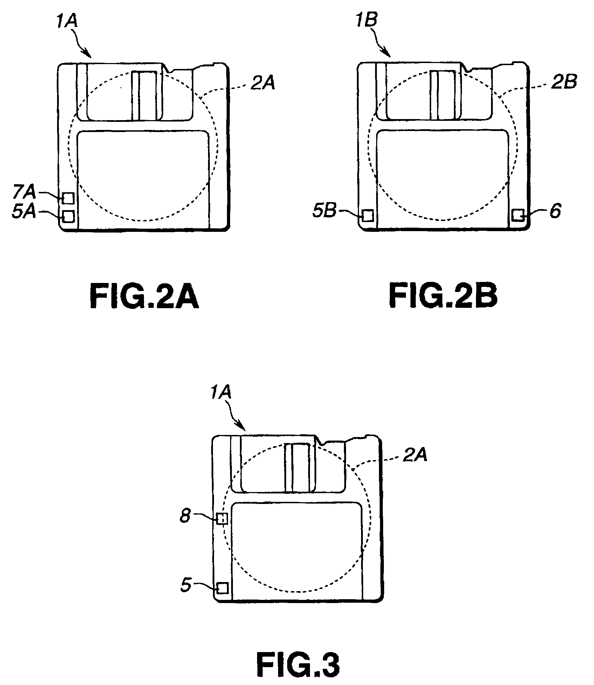

Fig.1 shows an example of a disc drive device 10 embodying the present invention. It is assumed that at least two sorts of the floppy discs 1A and 1B, as shown in Figs.2A and 2B, are usable in the disc drive device 10 shown in Fig.1. Specifically, Fig.2A shows a conventional floppy disc 1A holding a disc 2A of a high recording density mode (upper order mode) having a large recording capacity, while Fig.2B shows a floppy disc 1B of a standard recording density (lower order mode) having the recording capacity on the order of, for example,
2 Mbyte. In Figs.2A and 2B, write protectors 5A, 5B denote a writing enabling state and a writing inhibiting state when holes are closed or opened, respectively. Specifically, a hole 6 in Fig.2B denotes a pre-existing floppy disc 1B. Also, in Fig.2A, a hole 7 provided at a predetermined position other than the write protector 5A or the hole 6 in Fig.2B indicates the upper order mode floppy disc 1A for high density recording.

For identifying the upper order mode high capacity floppy disc, a light reflecting member 8 shown in Fig.3 may be provided, or possible presence of a cut-out or difference in reflectance may be used as identification means. If plural sorts of the upper order mode are prescribed due to difference in the recording capacity, plural sorts of the upper order mode may be discriminated based on the combination of presence and absence of plural holes.

Reverting to Fig.1, there are built into a magnetic head 11 for recording/reproducing data on or from floppy discs 1A or 1B a head chip 2 for the low order mode floppy disc 1B and a head chip 13 for the upper order mode floppy disc 1A. A motor 14 runs the floppy discs 1A, 1B in rotation. A controller 15 controls the operation of the entire disc drive, such as movement control of the magnetic head 11, and is responsive to mode signals (signal representing the upper order mode or the lower order mode) to change over the rpm of the motor 14, recording/reproducing circuit or the interface. A detection signal from a sensor 16, adapted for mechanically or optically detecting the sorts of the floppy disc 1A or 1B is sent via a disc sort discriminating circuit 17 as the aforementioned mode signal to the controller 15. It can be discerned whether the floppy disc 1A or the floppy disc 1B has been loaded based in position on whether or not the mode signal is sent to the controller 15.

The recording/reproducing system, connected to the head chip 12 for the lower order mode, includes an amplification circuit 21, a modulation/demodulation circuit 22, a formatting/deformatting circuit 23, an error processing circuit 24, a buffer memory 25 and an FDD interface 26. The recording/reproducing system, connected to the head chip 13 for the upper mode, is made up of an amplification circuit 31, a modulation/demodulation circuit 32, a formatting/deformatting circuit 33, an error processing circuit 34, a buffer memory 35 and an IDE interface 36.

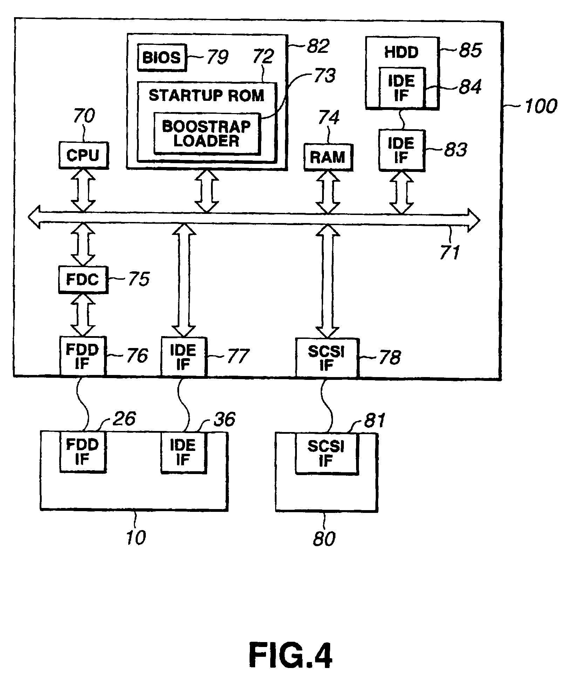

Referring to Fig.4, an illustrative structure of a computer system, to which is connected the disc drive device 10 according to the present invention, is explained.

Referring to Fig.4, a host computer 100 includes a CPU 70, a ROM 82, a RAM 74, an FDC75, an FDD interface 76, an IDE interface 77, a SCSI interface 78, an IDE interface 83 and an HDD 85 having an IDE interface 84, these being interconnected over a bus 71. In the ROM 82 are included a basic input/output system (BIOS) 79 and a bootstrap loader 73.

To the SCSI interface 78, FDD interface 76 and to the IDE interface 77, there are connected an SCSI interface 81 of a SCSI device 80, a FDD interface 10 of the disc drive device 10 and an IDE interface 36 of the disc drive device 10, respectively.

In the system shown in Fig.4, the CPU 70 operates at the time of system startup such as power up or resetting of the host computer 10, in order to check the possible connection of an external storage device. The CPU 70 then operates on the basis of a bootstrap loader 73 in a startup ROM 72 to load the system file from the floppy disc or the hard disc.

The operation of the CPU 70 at the system start is explained.

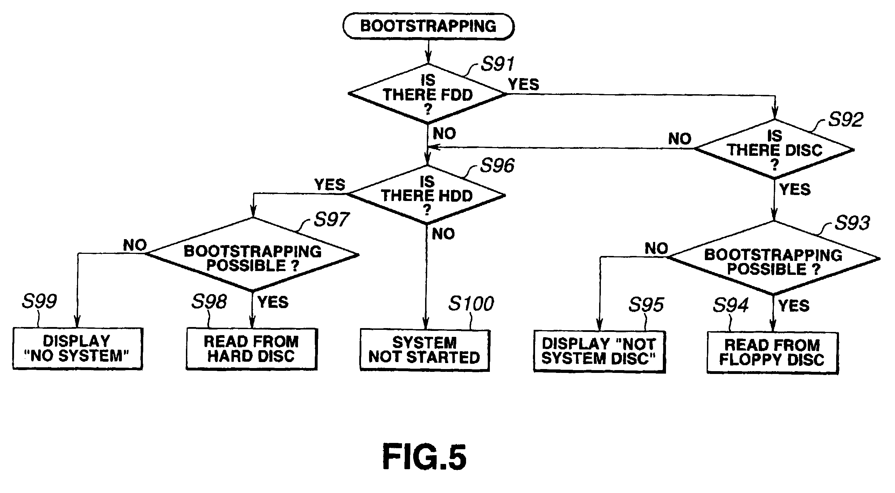

During startup of the host computer, the CPU 70 operates on the basis of, for example, BIOS 79 of Fig.4, in order to perform reliability tests or initialization. The control right of the CPU 70 is then transferred to the bootstrap loader 73 stored in the startup ROM 72. The CPU 70 then is operated on the basis of the bootstrap loader 73 to perform bootstrap processing shown in Fig.5.

The CPU 70 first discriminates at step S91 whether or not the FDD 10 is connected in circuit. If the result is YES, processing transfers to step S92 and, if otherwise, to step S96. At step S92, the CPU 70 discriminates, based on the possible supply of the mode signal from the disc sort discriminating circuit 17, whether or not the floppy disc 1A or 1B has been loaded in position. That is, if the mode signal has been supplied via controller 15, FDD interfaces 26, 76 and the CPU bus 71, the CPU 70 decides that the floppy disc 1A or 1B has been loaded in position, and proceeds to step S93. If there is supplied no mode signal, the CPU 70 decides that the floppy disc 1A or 1B has been loaded in position, and proceeds to step S96.

At step S93, the CPU 70 decides whether or not bootstrapping is possible based on the information stored in the floppy disc 1A or 1B loaded on the FDD 10. That is, if it is the conventional floppy disc 1B that is loaded on the FDD 10, and the system file is recorded on the floppy disc 1B, the CPU 70 decides that bootstrapping is possible. The CPU 70 judges that the system file has been recorded on the floppy disc 1B by controlling the magnetic head 11 via FDC 75, FDD interfaces 76, 26 and the controller 15 to read out the information from a predetermined recoding position of the floppy disc 1B to retrieve the information once stored in the buffer 25 via FDD interface 26and so forth.

If the system file has been recorded in the floppy disc 1B, the CPU 70 proceeds to step S94 to send a command of reading out the system file from the floppy disc 1B via the FDD interface 76 to the FDD 10. This sends the system file read out from the floppy disc 1B to the host computer 100 via FDD interface 76 so as to be retrieved by the RAM 74. The CPU 70 then shifts from the operation which is based on the bootstrap loader 73 to the operation which is based on the system file retrieved into the RAM 74.

If the system file has not been recorded in the floppy disc 1B, the CPU 70 proceeds to step S95 to indicate on a monitor, not shown, that the system disc is not in operation.

If the CPU 70 judges at step S91 that the FDD 10 is not connected in circuit, or if the CPU decides at step S92 that the floppy disc 1A or 1b is not loaded in position on the FDD 10, the CPU proceeds to step S96 in order to judge whether or not the HDD 85 is connected in circuit. If the HDD 85 is connected in circuit, the CPU proceeds to step S97 and, if otherwise, to step S100. In the latter case, the system has not been started up.

Also, when the CPU 70 proceeds to step S97, it decides whether or not bootstrapping is possible. Specifically, the CPU judges whether or not the system file has been recorded on the hard disc, not shown, of the HDD 85. If the system file has been recorded, the CPU 70 proceeds to step S98 to retrieve the system file from the hard disc tot the RAM 74. The CPU 70 then operates based on the system file. If at step S97 there is recorded no system file on the hard disc such that bootstrapping is not possible, the CPU 70 proceeds to step S99 to display the effect that there is no system file on a monitor, not shown.

As the interface for a high recording density (upper order mode) disc of the disc drive device of Fig.1, an extended IDE interface (EIDE interface), SCSI or IEEE (institute of Electrical and Electronics Engineers) 1394 standard interface, may be used in place of the above-mentioned IDE interface.

If, in the disc drive device 10 having compatibility between the upper order mode floppy disc 1A and the lower order mode floppy disc 1B, recording/reproduction is to be performed on or from the floppy disc 1B of the lower order mode, an accessing request is made for recording/reproduction from the external host computer 100 to the FDDIF 28, and the possible presence of the floppy disc 1B of the lower order mode is discriminated by the sequence of operations which is to be explained subsequently. If it is found that there is the disc, data is recorded from the host computer 100 or data is reproduced from the floppy disc 1B.

Specifically, during recording, recording data are stored via FDDIF 26 in the buffer memory 25 and thence sent to the error processing circuit 24 for generation and appendage of e.g., CRC. The resulting data is sent to the formatting/deformatting circuit 23 for conversion to data of a format having a sector structure suited to the recording on the pre-existing floppy disc 1B. The formatted data is sent to the modulation/demodulation circuit 22 for digital modulation, such as modified frequency modulation (MFM), and is amplified by the amplification circuit 21, from which it is routed to the head chip 12 for the lower order mode for recording on the floppy disc 1B.

During reproduction, the operation is the reverse of that during recording. That is, data reproduced by the had chip 12 from the floppy disc 1B is amplified by the amplification circuit 21 and processed with digital demodulation by the modulation/demodulation circuit 22. It is further deformatted by the formatting/deformatting circuit 23 and checked for errors in the error processing circuit 24. The resulting data is sent via buffer memory 25 and FDDIF 26 to the host computer 100.

For recording/reproduction on or from the upper order mode floppy disc 1A, an accessing request for recording/reproduction is made from the external host computer 100 to the IDEIF 36. The possible presence of the floppy disc 1A of the upper order mode is discriminated by the sequence of operations as later explained. If the floppy disc 1A of the upper order mode is found to be present, data is recorded on the floppy disc 1A or data recorded on the floppy disc 1A is reproduced.

Specifically, during recording, the data is stored via IDEIF 36 in the buffer memory 35, from which data is sent to the error processing circuit 34 for generation and appendage of the parity or error correction codes. Output data of the error processing circuit 34 is sent to the formatting/deformatting circuit 33 for conversion to data of the format having the sector structure suited to recording on the upper order mode floppy disc 1A. The formatted data is sent to the modulation/demodulation circuit 32 for digital modulation, such as MFM. The modulated data is amplified by the amplification circuit 31 and sent to the head chip 13 for the upper order mode for recording on the floppy disc 1A.

During reproduction, the operation is the reverse of that during recording. That is, data reproduced by the head chip 13 from the floppy disc 1A is amplified by the amplification circuit 31 and processed with digital demodulation by the modulation/demodulation circuit 32. It is further deformatted by the formatting/deformatting circuit 33 and checked for errors in the error processing circuit 34. The resulting data is sent via buffer memory 35 and FDDIF 36 to the host computer 100.

If the floppy disc 1A or 1B is inserted into the disc drive device of Fig.1, the possible presence of the hole 7 in Fig.2 is detected by the detector 16. The dis type is discriminated, that is, it is discriminated whether the disc inserted is the upper order mode floppy disc 1A or the lower order mode floppy disc 1B. The results of detection are sent as a mode signal to the controller 15. Based on this mode signal, the controller 15 selects one of the IDEIF 36 or FDDIF 26. On the other hand, the host computer 100 can make accessing requests to an optional one of plural interfaces provided in the disc drive device 10. Thus, it may be an occurrence that an accessing request be made from the side of the host computer 100 to the disc drive device 10 without the user not being aware which of the floppy discs 1A and 1B has been loaded on the disc drive device. In this case, it is up to the disc drive device 10 to make some response to the request from the host computer 100 by whichever one of the interfaces of the disc drive device 10. Specifically, the interface which is accessible on insertion of the floppy disc 1A or 1B performs data recording/reproduction and a response is made to a request for other invalid interfaces to the effect that there is no corresponding floppy disc.

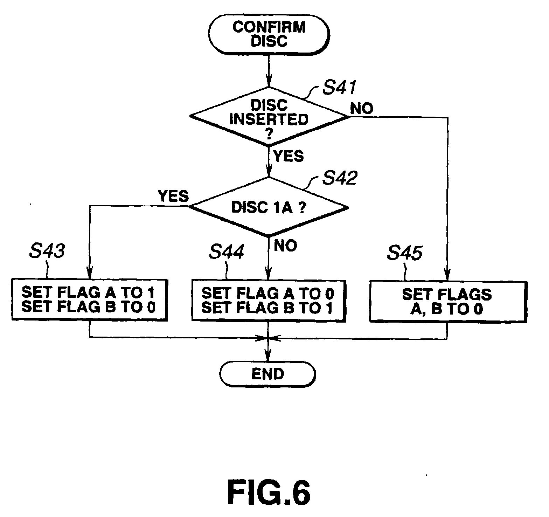

The operational sequence in the controller 15 for doing this control is explained with reference to Figs.6 to 8.

Fig.6 is a flowchart for illustrating the operation of checking the possible presence of the disc and as to the disc type. It is noted that the controller 15 performs the operation of Fig.6 at stated time intervals. In Fig.6, the controller 15 checks at step S41 whether or not the floppy disc 1A or 1B has been inserted. If the result is YES, the controller 15 proceeds to step S42 and, if otherwise, it proceeds to step S45. Specifically, if the mode signal is supplied from the disc sort discriminating circuit 17, the controller 15 judges that the floppy disc 1A or 1B has been inserted.

If the controller 15 has proceeded to step S45, it sets the flags A and B to 0. If the controller 15 has proceeded to step S42, it decides whether the upper order mode floppy disc 1A or 1B has been inserted. If the disc is the upper order mode floppy disc 1A, the controller 15 proceeds to step S43 to set the flags A and B to 1 and 0, respectively. If the disc is the lower order mode floppy disc 1B, the controller 15 proceeds to step S44 to set the flags A and B to 0 and 1, respectively.

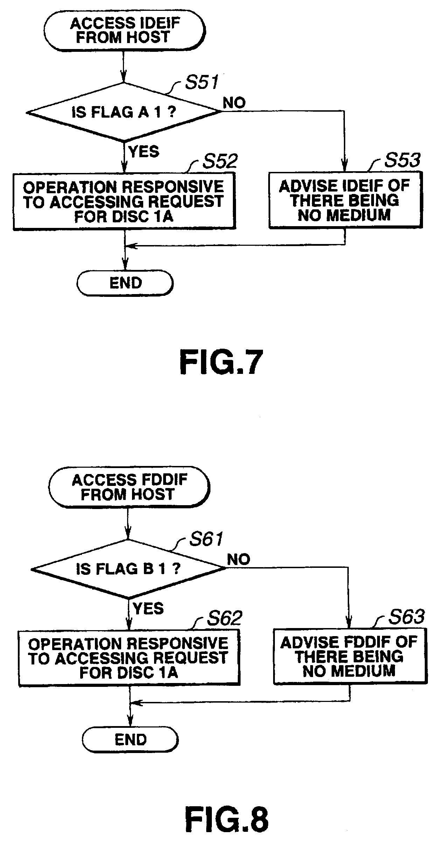

Fig.7 is a flowchart for illustrating the operation of the controller 15 when an accessing request has been made from the host computer 10 to the IDEIF 36
which is the above-mentioned upper order mode interface. Specifically, the flowchart shows the operation of the controller 15 when a command specifying an accessing request from the host computer 100 is sent via the FDDIF 26 to the controller 15. If an accessing request has been made to the upper order mode floppy disc 1A, the controller 15 checks at step S51 whether or not the flag A specifying the presence of the upper order mode floppy disc 1A is 1. If the result is YES, the controller proceeds to step S62 to perform a recording/reproducing operation in meeting with the accessing request to the disc 1A. That is, the controller 15 controls the motor 14 and the head chip 12 for the lower order mode in order to perform recording/reproduction in meeting with the accessing request. If the result of at step S51 is NO, the controller 15 proceeds to step S63 to advise the IDEIF 36 of the absence of the medium (floppy disc 1A) to make a response to the host computer 100.the response in this case includes displaying a message which reads: "There is no disc" or "there is no disc readied" on the host computer 100.

Fig.8 is a flowchart or illustrating the operation of the controller 15 when an accessing request is made from the host computer 100 to the FDDIF 26 which is the lower order mode interface. At this time, the controller 15 checks at step S61 whether or not the flag B specifying the presence of the floppy disc 1B of the lower order mode is 1. If the result is YES, the controller 15 proceeds to step S62 to perform a recording/reproducing operation corresponding to the accessing request for the disc 1B. If the result at step S61 is NO, the controller 15 proceeds to step S63 to advise the FDDIF 26 that there is no medium (floppy disc) to make a response to the host computer 100. As typical of the response in this case, a message to the effect that there is no disc or a message to the effect that there is no disc readied on a monitor of the host computer.

In the above-described embodiment of the present invention, the FDDIF 26, as an interface such as a pre-existing 3.5-inch micro floppy disc and an IDEIF 36 as an interface convenient for a floppy disc of the recording capacity of the order of tens to hundreds of megabytes, can be used on the same floppy disc device 10. By the controller 15 monitoring the possible presence or types of the floppy discs 1A and 1B and monistically controlling accommodation to a pertinent interface, it is possible for the host computer 100 to recognize the respective interfaces as interfaces of different drives to return a response that there is a disc present only for the interface pertinent to the inserted floppy disc 1A or 1B or a response that there is no disc present for any other interface. The result is that connection is made to the disc drive device 10 supporting plural formats without changing the control system from the host computer 100. Since the disc type is discriminated automatically, any operation other than the operation of inserting the floppy disc 1A or 1B is unnecessary to simplify the operation. Also, since a response to the effect that there is no disc is made even if the requested type of the floppy disc 1A or 1b is not inserted responsive to the request from the host computer 100, mistaken recognition occurs only on rare occasions to assure a user-friendly configuration.

The present invention is not limited to the above-described configuration. For example, it may be applied to other data storage devices, such as a data storage device handling a floppy disc other than the 3.5-inch floppy disc.

## Claims

1. A data storage apparatus on which is detachably loaded one of plural types of the recording mediums, comprising:
a plurality of interfaces (26, 36) provided in association with different types of the recording mediums (1A, 1B) for connection to an external control device (100);
means (17) for discriminating the type of a loaded recording medium; and
control means (15) which, when a command is supplied via one of the interfaces from the external control device, discriminates whether or not the interface coincides with the type of the loaded recording medium; said control means performing an operation corresponding to the command if the interface coincides with the type of the loaded recording medium; said control means (15) sending the information specifying the absence of the loaded recording medium via the interface to said external control device (100).

2. The data storage apparatus according to claim 1 wherein an
FDD interface (26) is among said plural interfaces.

3. The data storage apparatus according to claim 1 or 2 wherein an
IDE interface (36) is also among said plural interfaces.
